# EUROPÄISCHE PATENTSCHRIFT

(11) **EP 1 371 506 B1**
(45) Veröffentlichungstag und Bekanntmachung des Hinweises auf die Patenterteilung: **20.06.2007**
(21) Anmeldenummer: 03450090.0
(22) Anmeldetag: 16.04.2003
(51) Int. Cl.: B60C 23/00

(54) **Einrichtung für die automatische Betätigung einer Reifenfüllanlage für Kraftfahrzeuge**
Device for the automatic control of a tire inflation system for motorised vehicles
Dispositif pour le contrôle automatique d'un système de gonflage de pneumatiques pour vehicules motorisés

(30) Priorität: 14.06.2002 AT 9062002
(43) Veröffentlichungstag der Anmeldung: 17.12.2003
(73) Patentinhaber: Steyr-Daimler-Puch Spezialfahrzeug GmbH, 1110 Wien (AT)
(72) Erfinder: Skoff, Gerhard, Dipl.-Ing. Dr., 1230 Wien (AT)
(74) Vertreter: Rippel, Andreas

(56) Entgegenhaltungen:
- EP-A- 1 044 828
- GROENEWALD M L ET AL: "IN-MOTION TYRE PRESSURE CONTROL SYSTEM FOR VEHICLES" MELECON '96. 8TH. MEDITERRANEAN ELECTROTECHNICAL CONFERENCE. INDUSTRIAL APPLICATIONS IN POWER SYSTEMS, COMPUTER SCIENCE AND TELECOMMUNICATIONS. BARI, IT., MAY 13 - 16, 1996, MELECON. MEDITERRANEAN ELECTROTECHNICAL CONFERENCE, NEW YORK, IEEE, US, Bd. III CONF. 8, 13. Mai 1996 (1996-05-13), Seiten 1465-1468, XP000696030 ISBN: 0-7803-3110-9

## Beschreibung

Die Erfindung bezieht sich auf eine Einrichtung für die automatische Betätigung einer Reifenfüllanlage für Kraftfahrzeuge, mit einer Steuerelektronik, die über Sensoren oder durch eine Logikverknüpfung den Fahrzustand und den Reifendruck aller Reifen (13) ermittelt und pneumatische Ventile ansteuert, um den Reifendruck den jeweiligen Gegebenheiten, wie Fahrgeschwindigkeit, Beladung, Fahrbahnzustand, Gelände, u.s.w. anzupassen

Eine ähnliche Einrichtung ist z.B. in der AT 408 867 B und in der österreichischen Patentanmeldung A 1274/2001 beschrieben. Dabei wird im wesentlichen die Fahrgeschwindigkeit des Fahrzeuges und der aktuelle Reifendruck gemessen und der Sollwert des Reifendrucks ermittelt, und bei Abweichung des Istwerts vom Sollwert werden die Füll- bzw. Entleerventile bis zum Erreichen des Sollwerts des Reifendruckes angesteuert.

Auch in "GROENEWALD M L ET AL: IN-MOTION TYRE PRESSURE CONTROL SYSTEM FOR VEHICLES' MELECON '96. 8TH MEDITERRANEAN ELECTROTECHNICAL CONFERENCE. INDUSTRIAL APPLICATIONS IN POWER SYSTEMS, COMPUTER SCIENCE AND TELECOMMUNICATIONS. BARI, IT., MAY 13-16, 1996, MELECON. MEDITERRANEAN ELECTROTECHNICAL CONFERENCE, NEW YORK, IEEE, US, BD. III CONF. 8, 13, MAI 1996 (1996-05-13), SEITEN 1465-1468, XP000696030 ISBN: 0-7803-3110-9" ist eine ähnliche Einrichtung beschrieben.

Dabei wird die für das Füllen erforderliche Luft von einem Kompressor aus der atmosphärischen Umgebung angesaugt und komprimiert, das Ablassen der Luft bei einer Druckreduktion erfolgt ebenfalls in das Freie.

Der kritische Betriebszustand einer automatischen Reifendruckregelung ist das Befüllen, da ein für die jeweilige Fahrgeschwindigkeit zu geringer Reifendruck einen sicherheitskritischen Fahrzustand darstellt. Eine hinreichende Auslegung eines Vorratsspeichers gewährleistet zwar im Prinzip die Automatik, bei mehreren kurzfristig hintereinander liegenden wechselnden Regelvorgängen kann dieser Vorrat jedoch rasch erschöpft werden, was einen Eingriff in das Motormanagement nach sich ziehen müßte, um die Fahrsicherheit nicht zu gefährden.

Die vorliegende Erfindung hat zum Ziel, diese kritischen Betriebszustände möglichst zu vermeiden, was dadurch erreicht wird, dass ein Stellglied zur Vergrößerung oder Verkleinerung eines variablen Vorratsvolumens vorgesehen ist, das damit den Reifeninnendruck gemäß den Sollwerten anpasst.

Gleichzeitig werden damit störende Geräusche durch den Kompressor bzw. durch das Rohrleitungspfeifen aufgrund der hohen Druckunterschiede der vorgehend genannten Systeme verhindert. Durch das Stellglied kann die Druckänderung rasch und zuverlässig in beide Richtungen durchgeführt werden.

Das erfindungsgemäße System, das sowohl als gegenüber der Atmosphäre geschlossenes als auch als offenes System betrieben werden kann, bei dem der Reifeninnendruck einer vorhandenen Gasmasse in den Reifen mittels eines durch ein Rohrleitungs- und Ventilsystems verbundenes variables Vorratsvolumen über ein Stellglied verändert werden kann, weist darüber hinaus mehrere wesentliche Vorteile gegenüber einem kompressorbetriebenen System auf:
a. Aufgrund des geschlossenen Systems kann auch mit beliebigen anderen Gasen als Luft gearbeitet werden, spezielle Reifengase zur Unterstützung der technologischen und der Komforteigenschaften des Reifens können verwendet werden.
b. Speziell beim geschlossenen System kann der ansonsten erforderliche Lufttrockner entfallen, der zusätzliche Kosten verursacht und zusätzlichen Bauraum beansprucht.
c. Die Ventilanordnung kann wesentlich vereinfacht werden, da kein Druckvorratsbehälter erforderlich ist.
d. Der geräuschvolle Ablassvorgang der Reifenluft ins Freie entfällt, was die Komfortfunktion des Systems wesentlich verbessert.
e. Das laute Betriebsgeräusch des Kompressors entfällt, da die Druckänderung über eine Veränderung des Volumens bewirkt wird.
f. Der geräuschvolle Ausgleich der unterschiedlichen Druckniveaus zwischen Reifen und Druckvorratsbehälter entfällt.
g. Die zeitkritische Druckerhöhung des Druckvorratsbehälters durch den Kompressor, der gegen einen hohen Gegendruck arbeiten muss, entfällt durch die einfache Volumensänderung, bei der eine Änderung des Reifeninnendrucks, unabhängig ob Erhöhung oder Absenkung, immer im gleichen Zeitraum erfolgen kann.

Bei der Verwendung als gegenüber der Atmosphäre geschlossenes System tritt ein Nachteil auf, den es entsprechend zu kompensieren gilt. Geringfügige Leckagen sind in einem pneumatischen System mit zahlreichen Anschlüssen, Ventilen und Dichtungen unvermeidlich. Das geschlossene System besitzt nicht die systemimmanente Eigenschaft, Leckagen durch von außen angesaugte Frischluft zu kompensieren.

Erfindungsgemäß können jedoch Leckageverluste, die die Reserve des Vorratsvolumens überschreiten, nachgefüllt werden, indem eine einfach zu wechselnde Zusatzpatrone, die z.B. mit verflüssigtem Reifengas gefüllt ist, über ein Ventil angeschlossen wird, bei Überschreiten eines kritischen Befüllungsstandes automatisch den Füllgrad wieder auf Sollstand bringt.

Bei einem Einsatz als gegenüber der Atmosphäre offenem System kann in einfacher Weise bei sonst geschlossenen Ventilen Aussenluft über ein speziell dafür angeordnetes Ventil durch Vergrößerung des Vorratsvolumen angesaugt werden, womit das erforderliche Luftvolumen sichergestellt wird.

In analoger Art und Weise kann damit auch ein schleichender Druckverlust durch einen defekten Reifen in einem gegenüber der Atmosphäre geschlossenen System ausgeglichen werden, da aufgrund der Auslegungskriterien kein Potential für einen zusätzlichen Druckvorrat gegeben ist. Um dieses zusätzliche Sicherheitspotential, das eine automatische Reifendruckregelung bereitstellen kann, auch auszuschöpfen, soll die Einrichtung erfindungsgemäß bei einem erkannten diesbezüglichen Notfall auf eine Umgebungsluftversorgung umgeschalten werden. Ebenso kann diese Funktion in Kraft treten, wenn die zuvor beschriebene Druckvorratspatrone erschöpft und nicht rechtzeitig ersetzt wurde.

Eine systemimmanente Eigenheit einer Reifendruckregelung mit variablem Volumen anstatt eines Kompressors ist das Fehlen eines entsprechenden Überdruck-Regelkreises für die Steuerleitung, um das Radventil zu öffnen. Daher muss der Steuerkreis vom Füllkreis komplett entkoppelt werden und eine eigene Druckversorgung bereitgestellt werden. Dies kann zum Beispiel durch einen entsprechend dimensionierten Pneumatikzylinder erfolgen, der den Druck im Steuerleitungssystem zwischen Umgebungsdruck und dem erforderlichen Radventilöffnungsdruck variiert.

In einer bevorzugten Ausführung wird der Überdruck im Füllleitungssystem nach erfolgtem Regelvorgang auch entlüftet. Dies kann in einem gegenüber der Atmosphäre offenen System z.B. über das Umgebungsluftventil erfolgen, oder, wie es z.B. auch in einem gegenüber der Atmosphäre abgeschlossenen System, wo das Entlüftungsvolumen im System erhalten bleiben muss, ausgeführt sein kann, in analoger Ausführung wie für die Steuerleitung oder in einfacher Weise auch durch eine entsprechende Volumensvergrößerung des variablen Volumens bei geschlossenem Radventil.

Nachstehend ist die Erfindung anhand von in den Zeichnungen dargestellten Ausführungsbeispielen näher beschrieben, ohne auf diese Beispiele beschränkt zu sein. Dabei ist das Schaltschema einer erfindungsgemäßen Einrichtung dargestellt, bei der die Druckinformation für die Reifendruckregelsystemelektronik von einer Sensorelektronik im Reifeninneren bereitgestellt wird. Die Reifendruckinformation kann auch anderweitig bereitgestellt werden, ebenso ist die Sensorik zur Erfassung des Fahrzustandes und zur Zuordnung des entsprechenden Reifensolldruckes nicht auf die Reifendruckinformation beschränkt.

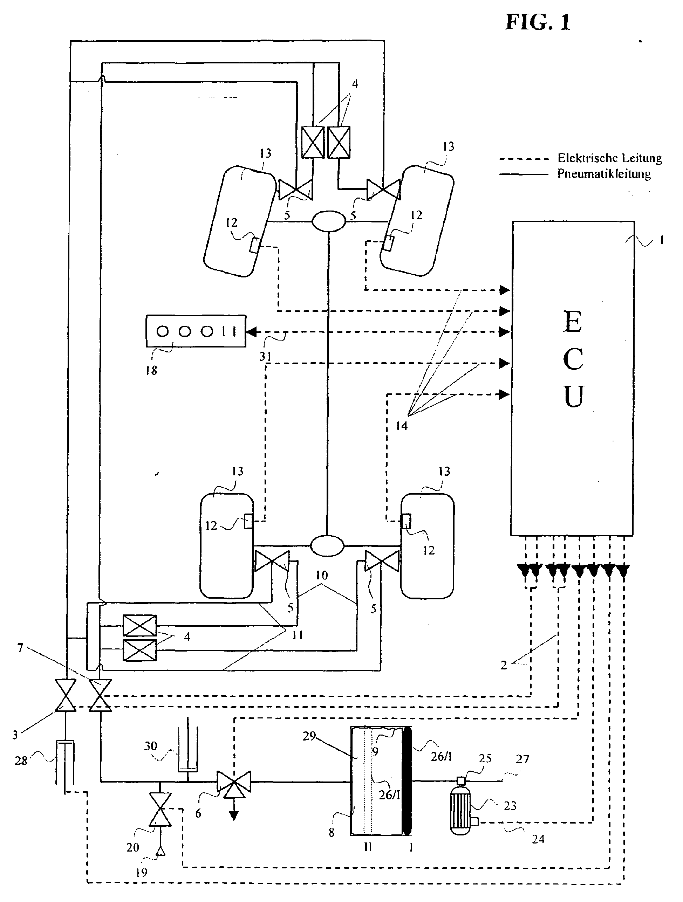

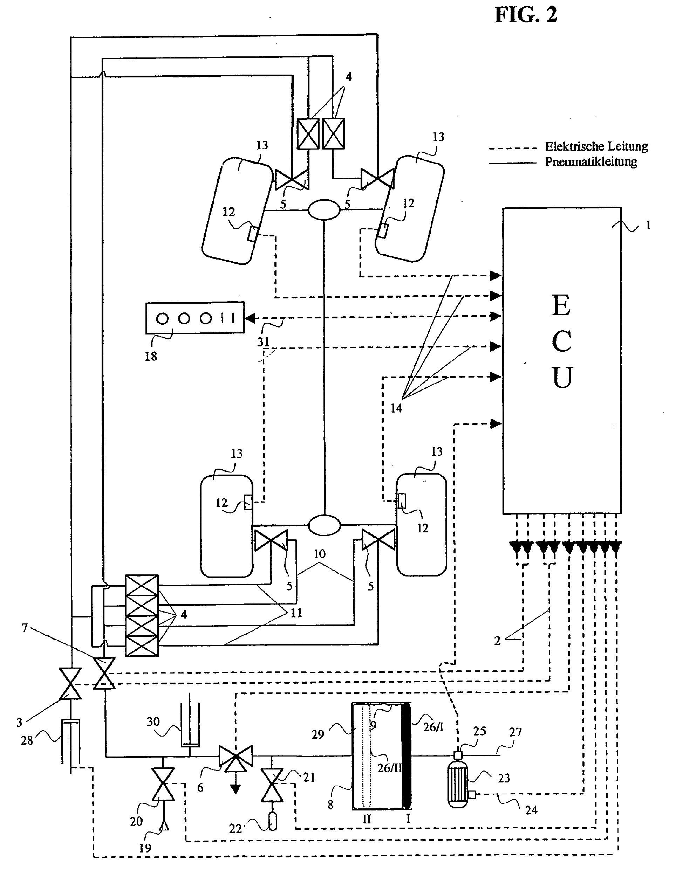

In Fig. 1 ist dabei das Schema eines offenen Systems, in Fig. 2 das Schema eines gegenüber der Atmosphäre geschlossenen Systems dargestellt.

Die Zeichnungen zeigen das hinter dem Reifendruckregelsystem gelegte pneumatische Schaltschema beispielhaft für eine gemeinsame Ansteuerung aller Räder, jedoch kann das System auch für eine beliebige andere Ansteuerung, z.B. aller vier Räder einzeln, achsweise oder in Abhängigkeit von der Achse rad- oder achsweise eingesetzt werden..

Die Steuerung erfolgt durch die zentrale Regelelektronik 1. Diese Elektronik 1 ist mit einem Sensorsystem verknüpft, das unter anderem den Reifendruck 14, Fahrzustandsinformationen 31, wie z.B. den Beladungszustand, die Fahrgeschwindigkeit, und die Bremse überwacht und die jeweiligen Informationen an die zentrale Regelelektronik kommuniziert. Eine vorzugsweise Fahrgeschwindigkeits- und Fahrzustandsüberwachung ist im Detail in der AT 408 867 B, bzw. in der österreichischen Patentanmeldung A 1274/2001, auf die hier besonders Bezug genommen werden, beschrieben. Die Reifendrucküberwachung ist Stand der Technik.

Wird durch eine Verknüpfung der eingehenden Sensorsignale die Notwendigkeit zu einem Regelvorgang erkannt, werden mittels eines Logikbefehls der Elektronik 1 die Pneumatikelemente wie folgt geschalten:

Erfolgt ein Schaltbefehl aufgrund einer Überschreitung der in den Regelkennfeldern jeweils vorgegebenen Schaltwerte zur Druckerhöhung in einem oder in mehreren Reifen oder Regelkreisen, werden über die elektrischen Steuerleitungen 2 die vorzugsweise elektromagnetisch betätigten Steuerventile 3 geöffnet. Gleichzeitig wird durch das Stellglied 28, vorzugsweise ein Pneumatikzylinder, der Druck in der Steuerleitung 11 soweit erhöht, dass die Radventile 5 öffnen. Nun wird das oder die Füllventile 7 geöffnet und dem Stellglied 23, vorzugsweise ein Elektromotor, über die elektrische Steuerleitung 24 ein Steuerbefehl von der elektronischen Steuereinheit 1 übermittelt, und die Steuerstange 27 betätigt über ein Getriebe 25 den Steuerkolben 26 in Richtung aus Position I hin zu Position II. Dadurch wird das Volumen 29 des Behälters 8 verkleinert, und damit das Gas in den Füllrohrleitungen 10 und den Rädern 13 der angesteuerten Regelkreise komprimiert.

In einer bevorzugten Ausführung ist das Volumen 29 in einem flexiblen Sack 9, zum Beispiel, aber nicht ausschließlich aus luftdichtem Gewebe oder aus Kunststoff, untergebracht, der sich beim Verschieben des Kolbens 26 von der Position I in die Position II zusammenfaltet, und der die Abdichtung des Kolbens 26 gegen den Zylinder 8 wesentlich vereinfacht.

Da das Volumen der Reifen 13 sehr groß ist im Vergleich zum Innenvolumen der Fülleitungen 10, und die Druckänderung im Reifen relativ langsam vor sich geht, kann der Reifeninnendruck messtechnisch als quasistatisch gesehen werden, und nur durch Messung des statischen Druckanteils des Gases ein hinreichend genauer Wert ermittelt werden. Die Radelektronik 12 mit dem zugehörigen Drucksensor des Reifendruckkontrollsystems im Radinneren ermittelt kontinuierlich den jeweiligen Druckwert und gibt ihn über die elektrische Steuerleitung 14 an die zentrale Steuerelektronik 1 weiter. Ist der Solldruck in den angesteuerten Reifen 13 erreicht, was entweder über eine geschilderte Sensorik zur Reifendrucküberwachung oder durch Verknüpfung verschiedener Sensorsignale oder durch die Positionsinformation der Kolbenstange 27 oder des Getriebes 25 erfolgen kann, reduziert der Aktuator 28 den Druck in der Steuerleitung 11, sodass die Radventile 5 schließen. Gleichzeitig werden die Steuer- und Füllventile 3 und 7 geschlossen.

Erfolgt ein Schaltbefehl aufgrund einer Überschreitung der in den Regelkennfeldern jeweils vorgegebenen Schaltwerte zur Druckabsenkung in einem oder in mehreren Reifen oder Regelkreisen, werden über die elektrischen Steuerleitungen 2 die vorzugsweise elektromagnetisch betätigten Steuerventile 3 geöffnet. . Gleichzeitig wird durch das Stellglied 28, vorzugsweise ein Pneumatikzylinder, der Druck in der Steuerleitung 11 soweit erhöht, dass die Radventile 5 öffnen. Nun wird das oder die Füllventile 7 geöffnet und dem Stellglied 23, vorzugsweise ein Elektromotor, über die elektrische Steuerleitung 24 ein Steuerbefehl von der elektronischen Steuereinheit 1 übermittelt, und die Steuerstange 27 betätigt über ein Getriebe 25 den Steuerkolben 26 in Richtung aus Position II hin zu Position I. Dadurch wird das Volumen 29 des Behälters 8 vergrößert, und damit der Druck des Gases in den Füllrohrleitungen 10 und den Rädern 13 der angesteuerten Regelkreise reduziert. Ist der Solldruck in den angesteuerten Reifen 13 erreicht, reduziert der Aktuator 28 den Druck in der Steuerleitung 11, sodass die Radventile 5 schließen. Gleichzeitig werden die Steuer- und Füllventile 3 und 7 geschlossen.

Das 3-Wegeventil 6 ist bei all diesen Funktionen immer frei durchgeschaltet. Das Ventil hat lediglich den Zweck, eine Weiche für das Reifenfüllsystem darzustellen, damit das veränderbare Volumen 29 auch für andere Zwecke zur Druckveränderung, z.B. einer Gasfeder, genutzt werden kann.

Aufgrund der Aktuierung des Stellgliedes 28 ist der Druck in den Steuerleitungen 11 auf Atmosphäendruck nach dem Regelvorgang reduziert. Die Füllleitung 10 kann druckentlastet werden, indem bei einem offenen System (Fig.1) nach Öffnen der Füllventile 7 bei geschlossenen Radventilen 5 über das Ventil 20 und den Schalldämpfer 19 entlüftet wird.

Wenn die Reifendruckregelanlage als geschlossenes System (Fig. 2) betrieben wird, kann die Entlüftung des Rohrleitungssystems nicht an die Atmosphäre erfolgen, sondern muss über ein separates Entlüftungssystem sichergestellt werden. Eine mögliche Ausführung 30 ist eine analoge Ausführung zu 28, bei der durch ihre Betätigung der Innendruck des angeschlossenen Rohrleitungsvolumens der Füllleitungen 10 auf Umgebungsdruck reduziert wird. Auch durch Ansteuern und Öffnen der Füllventile 7, verbunden mit einer Bewegung des Kolbens 26 in Richtung von der Position II zur Position I, wobei die Radventile 5 geschlossen bleiben, kann der Druck in den Leitungen 10, speziell in den Drehdurchführungen 4 in ähnlicher Art und Weise abgesenkt werden.

Über eine entsprechende Anzeige 18 kann der Fahrer über den jeweiligen Zustand der Reifen informiert werden. Mittels dieses Fahrerinformationssystems kann auch eine Defektwarnung erfolgen, oder die Information über die jeweilige, dem Beladungs- und Druckzustand der Reifen zugeordnete Fahrzeughöchstgeschwindigkeit erfolgen.

Leckageverluste können einfach dadurch ausgeglichen werden, indem bei geschlossenen Füllventilen 7 sowie bei geöffnetem Ventil 20 infolge einer Bewegung des Kolbens 26 in Richtung aus Position II hin zu Position I Umgebungsluft angesaugt wird.

In einem geschlossenen System nach Fig. 2, bei dem mit einem anderen Gas als der Umgebungsluft, zum Beispiel mit einem technologischen Reifengas, gearbeitet wird, kann durch eine einfach zu wechselnde Zusatzpatrone 22, die mit dem selben Medium wie das geschlossene System, z.B. mit Luft oder einem speziellen Reifengas in verflüssigtem Zustand gefüllt ist, ausgeglichen werden. Diese bringt bei Überschreiten eines kritischen Befüllungsstandes durch ein automatisches Öffnen des Ventils 21 den Füllgrad wieder auf Sollstand.

Um einen schleichenden Druckverlust durch einen defekten Reifen auszugleichen, kann auch bei einem geschlossenen System über ein Ventil 20 auf eine Umgebungsluftversorgung umgeschalten werden. Ebenso kann diese Funktion in Kraft treten, wenn die Druckvorratspatrone 22 erschöpft und nicht rechtzeitig ersetzt wurde.

## Patentansprüche

1. Einrichtung für die automatische Betätigung einer Reifenfüllanlage für Kraftfahrzeuge, mit einer Steuerelektronik, die über Sensoren oder durch eine Logikverknüpfung den Fahrzustand und den Reifendruck aller Reifen (13) ermittelt und pneumatische Ventile ansteuert, um den Reifendruck den jeweiligen Gegebenheiten, wie Fahrgeschwindigkeit, Beladung, Fahrbahnzustand, Gelände, u.s.w. anzupassen, **dadurch gekennzeichnet, daß** ein Stellglied (23) zur Vergrößerung oder Verkleinerung eines variablen Vorratsvolumens (29) vorgesehen ist, das damit den Reifeninnendruck gemäß den Sollwerten anpasst.

2. Einrichtung nach Anspruch 1, **dadurch gekennzeichnet, daß** zur Vergrößerung oder Verkleinerung des variablen Vorratsvolumens (29) ein in einem Zylinder (8) geführter Kolben (26) angeordnet ist.

3. Einrichtung nach Anspruch 1 oder 2, **dadurch gekennzeichnet, daß** das variable Vorratsvolumen (29) in einer gasdichten Umhüllung eingeschlossen ist.

4. Einrichtung nach Anspruch 1, 2 oder 3, **dadurch gekennzeichnet, daß** das Stellglied (23) ein Elektromotor ist.

5. Einrichtung nach Anspruch 4, **dadurch gekennzeichnet, daß** der Elektromotor (23) ein Schrittmotor ist.

6. Einrichtung nach einem der vorgenannten Ansprüche, **dadurch gekennzeichnet, daß** zur Übertragung des Stellwertes zur Änderung des variablen Vorratsvolumens (29) ein Getriebe (25) vorgesehen ist.

7. Einrichtung nach einem der vorgenannten Ansprüche, **dadurch gekennzeichnet, daß** ein Ventil (20) angeordnet ist, das Umgebungsluft zum Ausgleich von Leckagen im Leitungssystem und schleichenden Druckverlusten in den Reifen (13) ansaugt.

8. Einrichtung nach einem der vorgenannten Ansprüche, **dadurch gekennzeichnet, daß** das System als ein gegenüber der Atmosphäre geschlossenes System betreibbar ist.

9. Einrichtung nach Anspruch 8, **dadurch gekennzeichnet, daß** Leckageverluste des geschlossenen Systems durch ein von der Steuerelektronik angesteuertes Ventil (21) und einer Wechselpatrone (22) mit dem Betriebsgas des geschlossenen Systems bei Überschreiten eines kritischen Befüllungsstandes automatisch ausgeglichen werden und der Füllgrad des geschlossenen Systems wieder auf Sollstand gebracht wird.

10. Einrichtung nach Anspruch 8 oder 9, **dadurch gekennzeichnet, dass** an das geschlossene System über ein von der Steuerelektronik anzusteuerndes 3-Wegeventil (6) Teile des Systems auch von anderen Systemen zur Druckgasversorgung verwendbar sind.

11. Einrichtung nach einem der vorgenannten Ansprüche, **dadurch gekennzeichnet, daß** das pneumatische Leitungssystem des geschlossenen Systems über ein variables Zusatzvolumen (30), das zumindest dem Inhalt des Leitungssystems entspricht, entlüftet wird.

12. Einrichtung nach einem der vorgenannten Ansprüche, **dadurch gekennzeichnet, daß** unter Wegfall von Steuerventilen (3) und Steuerleitungen (11) die Öffnung von Radventilen (5) ebenfalls über die Füllleitung (10) erfolgt.

13. Einrichtung nach einem der vorgenannten Ansprüche, **dadurch gekennzeichnet, daß** Steuerleitungen (11) über eine separate Druckerhöhungseinrichtung (28) druckbeaufschlagt und entlüftet werden.

14. Einrichtung nach Anspruch 13, **dadurch gekennzeichnet, daß** die Druckerhöhungseinrichtung ein Pneumatikzylinder ist.

## Claims

1. A device for the automatic actuation of a tyre-filling apparatus for motor vehicles, comprising an electronic controller which, via sensors or with a logic unit determines the driving conditions and the tyre pressure of all of the tyres (13) and controls pneumatic valves to match the tyre pressure to the respective conditions such as vehicle speed, vehicle loading, road conditions, terrain, etc., **characterized in that** a control element (23) is provided for increasing or decreasing a variable supply volume (29), thereby matching the internal tyre pressure in accordance with the setpoint values.

2. The device according to Claim 1, **characterized in that** to increase or decrease the variable supply volume (29), a piston (26) is arranged which is guided in a cylinder (8).

3. The device according to Claim 1 or 2, **characterized in that** the variable supply volume (29) is enclosed in a gas-tight envelope.

4. The device according to Claim 1, 2 or 3, **characterized in that** the control element (23) is an electric motor.

5. The device according to Claim 4, **characterized in that** the electric motor (23) is a stepping motor.

6. The device according to any of the preceding claims, **characterized in that** a gear (25) is provided for the transmission of the control value to alter the variable supply volume (29).

7. The device according to any of the preceding claims, **characterized in that** a valve (20) is arranged, which draws in ambient air to compensate leakages in the line system and slow pressure losses in the tyres (13).

8. The device according to any of the preceding claims, **characterized in that** the system is operable as a system which is closed with respect to the atmosphere.

9. The device according to Claim 8, **characterized in that** leakage losses of the closed system are automatically compensated by a valve (21) controlled by the electronic controller, and a replaceable cartridge (22) with the operating gas of the closed system when a critical filling state is exceeded, and the filling level of the closed system is brought again to the setpoint state.

10. The device according to Claim 8 or 9, **characterized in that** parts of the system (connected) to the closed system via a three-way valve (6) which is to be controlled by the electronic controller are also able to be used by other systems for the supply of pressure gas.

11. The device according to any of the preceding claims, **characterized in that** the pneumatic line system of the closed system is vented via a variable additional volume (30) which corresponds at least to the content of the line system.

12. The device according to any of the preceding claims, **characterized in that** with the omission of control valves (3) and control lines (11), the opening of wheel valves (5) likewise takes place via the filling line (10).

13. The device according to any of the preceding claims, **characterized in that** control lines (11) are pressurized and vented via a separate pressure increase device (28).

14. The device according to Claim 13, **characterized in that** the pressure increase device is a pneumatic cylinder.

## Revendications

1. Dispositif pour l'actionnement automatique d'une installation de remplissage de pneumatiques pour véhicules automobiles, avec une électronique de commande qui communique l'état de conduite et le niveau de pression de toutes les pneumatiques (13), par le biais de détecteurs ou par une combinaison logique, et qui actionne des soupapes pneumatiques, afin d'adapter la pression des pneumatiques aux différentes conditions, telles que la vitesse de conduite, la charge, l'état de la route, etc., **caractérisé par** un élément de réglage (23) prévu pour augmenter ou diminuer un volume de réserve (29) variable, qui permet ainsi d'adapter la pression interne des pneumatiques en fonction des valeurs théoriques.

2. Dispositif selon la revendication 1, **caractérisé par** un piston (26) qui est introduit dans un cylindre (8) afin d'augmenter ou de diminuer le volume de réserve (29) variable.

3. Dispositif selon la revendication 1 ou 2, **caractérisé en ce que** le volume de réserve (29) variable est enfermé dans une poche hermétique.

4. Dispositif selon la revendication 1, 2 ou 3, **caractérisé en ce que** l'élément de réglage (23) est un moteur électrique.

5. Dispositif selon la revendication 4, **caractérisé en ce que** le moteur électrique (23) est un moteur pas à pas.

6. Dispositif selon l'une des précédentes revendications, **caractérisé en ce qu'**un mécanisme de transmission (25) est prévu pour transmettre la valeur de réglage en vue de la modification du volume de réserve (29) variable.

7. Dispositif selon l'une des précédentes revendications, **caractérisé par** une soupape (20) qui aspire de l'air ambiant pour compenser les fuites dans le système de conduites et les pertes de pression dans les pneumatiques (13).

8. Dispositif selon l'une des précédentes revendications, **caractérisé en ce que** le système peut fonctionner comme un système fermé à l'atmosphère.

9. Dispositif selon la revendication 8, **caractérisé en ce que** les pertes dues aux fuites dans le système fermé sont automatiquement compensées à l'aide d'une soupape (21) activée par l'électronique de commande et d'une cartouche de réserve (22), avec le gaz de fonctionnement du système fermé, lors d'un dépassement du niveau de remplissage critique, et le remplissage du système fermé est ramené au niveau théorique.

10. Dispositif selon la revendication 8 ou 9, **caractérisé en ce que** des pièces du système fermé peuvent également être utilisées par d'autres systèmes pour l'alimentation en gaz comprimé, par l'intermédiaire d'une soupape de distribution à trois voies (6) commandée par l'électronique de commande.

11. Dispositif selon l'une des précédentes revendications, **caractérisé en ce que** l'air dans le système de conduites pneumatiques du système fermé peut être évacué par le biais d'un volume supplémentaire (30 variable qui équivaut au minimum au contenu du système de conduites.

12. Dispositif selon l'une des précédentes revendications, **caractérisé en ce que** l'ouverture des soupapes de roue (5) peut également être effectuée par le biais de la conduite de remplissage (10) en cas de défaillance des soupapes de commande (3) et des conduites de commande (11).

13. Dispositif selon l'une des précédentes revendications, **caractérisé en ce que** des conduites de commande (11) sont chargées en pression et évacuées à l'aide d'un dispositif d'augmentation de pression indépendant (28).

14. Dispositif selon la revendication 13, **caractérisé en ce que** le dispositif d'augmentation de pression indépendant (28) est un vérin pneumatique.
